# EUROPEAN PATENT SPECIFICATION

(11) **EP 0 512 515 B1**
(45) Date of publication and mention of the grant of the patent: **04.10.1995**
(21) Application number: 92107652.7
(22) Date of filing: 06.05.1992
(51) Int. Cl.: G01L 5/28

(54) **Apparatus for conducting braking tests on an automobile vehicle provided with a braking system having an anti-skid device**
Gerät zur Durchführung von Bremsprüfungen an Kraftfahrzeugen mit einem Anti-Skid-Bremssystem
Appareil d'essai de freinage pour un véhicule automobile pourvu d'un système de freinage antidérapant

(30) Priority: 07.05.1991 IT TO910342
(43) Date of publication of application: 11.11.1992
(73) Proprietor: FIAT AUTO S.p.A., 10135 Torino (IT)
(72) Inventor: Rossi, Carlo, I-10100 Torino (IT); Canavese, Renato, I-10100 Torino (IT)
(74) Representative: Jorio, Paolo, Dr. Ing.

(56) References cited:
- EP-A- 0 331 799
- EP-A- 0 360 179
- EP-A- 0 367 329
- US-A- 3 206 973
- US-A- 4 455 866

## Description

The present invention relates to an apparatus for conducting braking tests on an automobile vehicle provided with a braking system having an anti-skid device.

The behaviour of a vehicle braking system having an anti-skid device is normally tested by road tests where the vehicle is driven on roads offering a wide range of driving conditions and tyre surface adhesion. These tests may be needed either to monitor the performance of a new braking system or simply to monitor the correct operation of the anti-skid device after it has been mounted on the vehicle.

The object of the present invention is to provide a device for conducting braking tests on an automobile vehicle provided with a braking system having an anti-skid device which allows the reproduction of those operating conditions encountered in practice, in this way obviating the need for road tests and offering a multiplicity of operating conditions which is more wide-ranging than that which can be obtained using direct road tests.

This object is achieved by an apparatus for conducting braking tests on an automobile vehicle provided with a braking system having an anti-skid device, characterized in that it comprises a series of rotary rollers, each of which is adapted to form a support for a vehicle wheel, first means adapted to vary the force N transmitted between the wheel and the roller in the direction substantially perpendicular to the tangent plane between the roller and wheel, said first means comprising a support for the vehicle bodywork adapted to hold it in a predetermined vertical position with respect to the rollers and a support for each of these rollers which can be moved by actuating an actuator to bring the roller to act on the relative wheel and second means adapted to generate a tangential force T between the roller and wheel contained substantially in this plane.

The structure and operating methods of the apparatus are now described in further detail, by way of example, with reference to the accompanying drawings, in which:
Figs. 1 and 2 are diagrammatic side and plan views of the apparatus of the invention;
Figs. 3 and 4 are side and plan views of part of the apparatus of the invention;
Fig. 5 is a side view in partial section of the basic mechanical assembly of the apparatus of the invention;
Fig. 6 is a cross-section through the apparatus of Fig. 2 along the line VI-VI of Fig. 2;
Fig. 7 is a side view of the basic mechanical assembly of the apparatus.

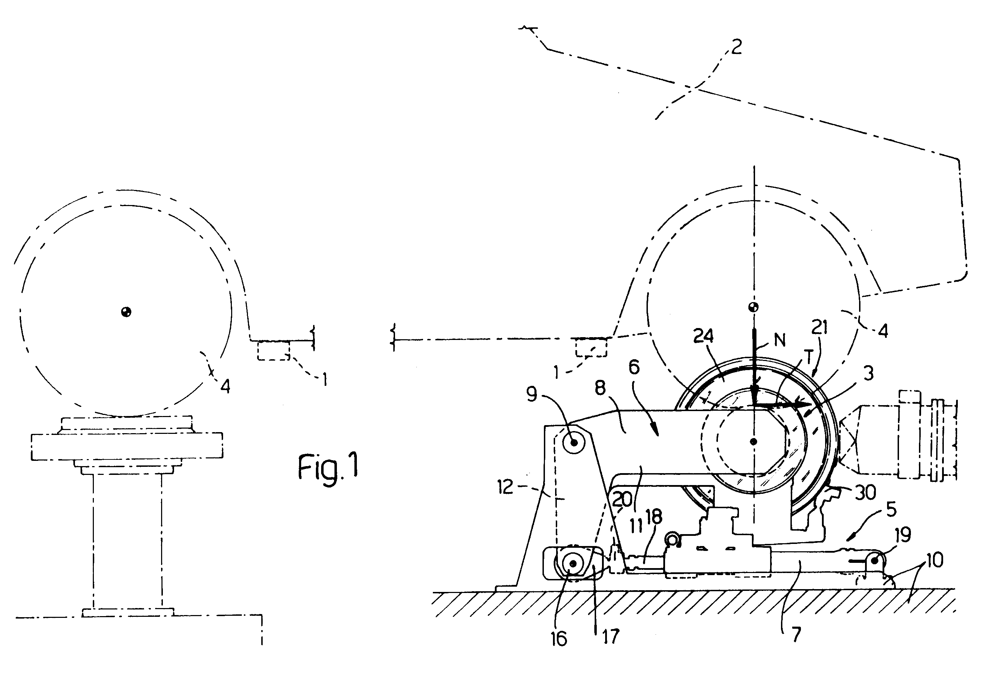

In Fig. 1 the apparatus of the invention substantially comprises a support 1 adapted to support an automobile vehicle 2 in a predetermined vertical position and a series of rotary rollers 3, each of which is adapted to act as a support for a wheel 4 of the vehicle. The series of rotary rollers may comprise only two rollers, as shown in the apparatus illustrated in the Figures, or four rollers each of which acts as a support for a corresponding wheel of the vehicle.

The apparatus further comprises means adapted to vary the force N (Fig. 1) which is transmitted between each wheel 4 and the relative roller 3 in the direction substantially perpendicular to the tangent plane between the wheel and roller; these means are shown overall by 5.

The apparatus further comprises means adapted to generate a tangential force T (Fig. 1) between the wheel and roller contained substantially in the above tangent plane; these means may be embodied in different ways as described below.

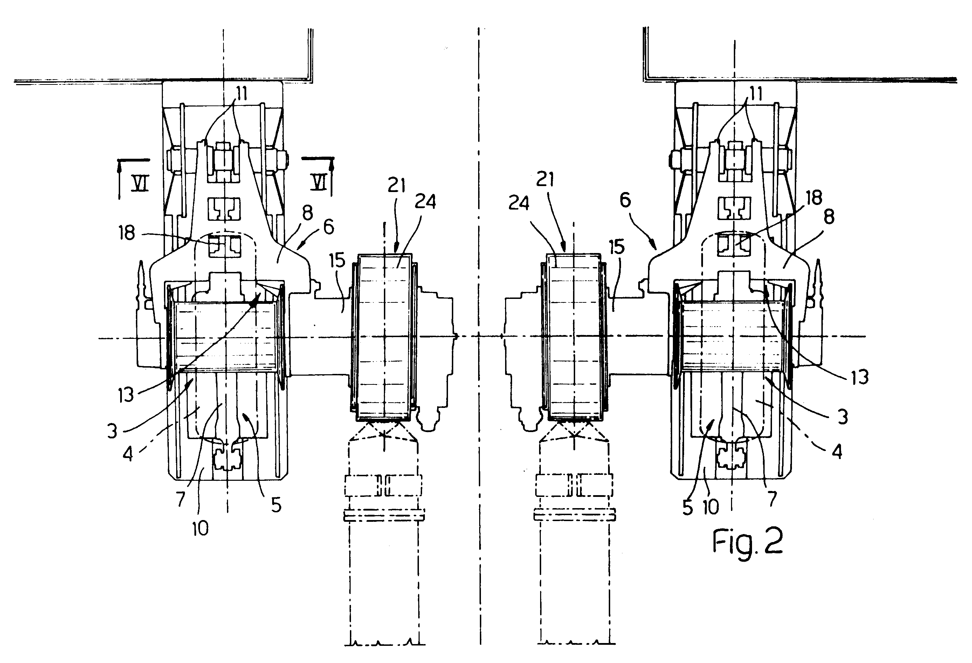

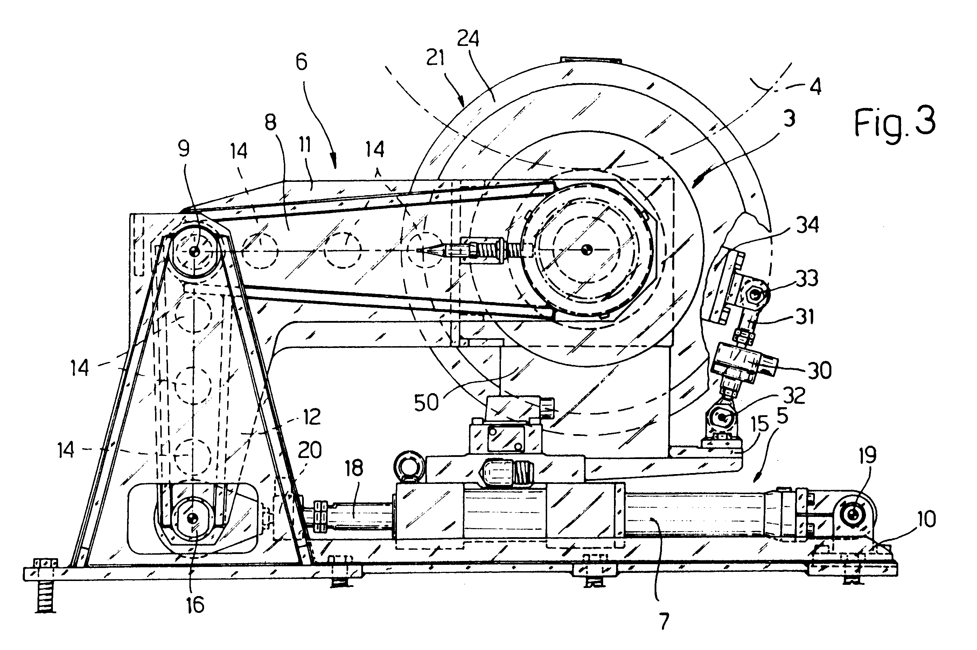

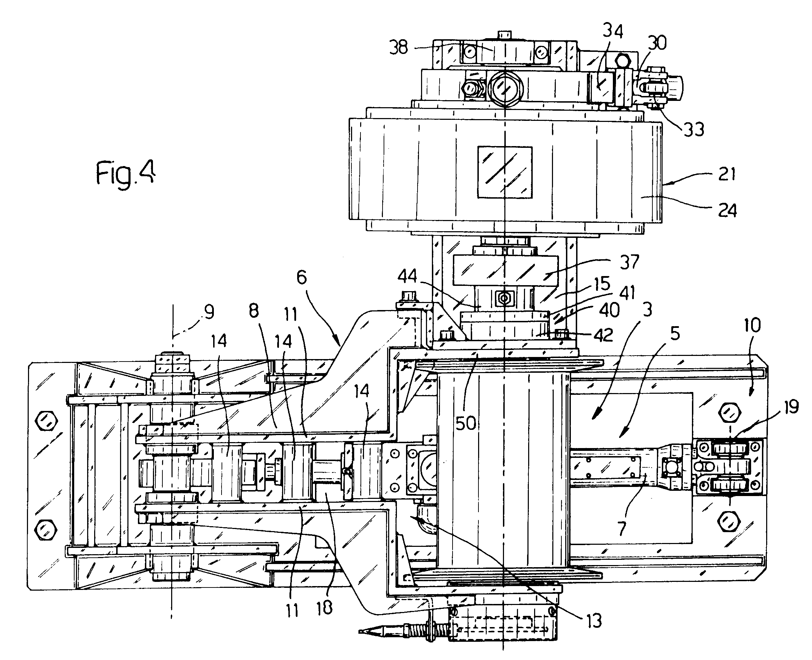

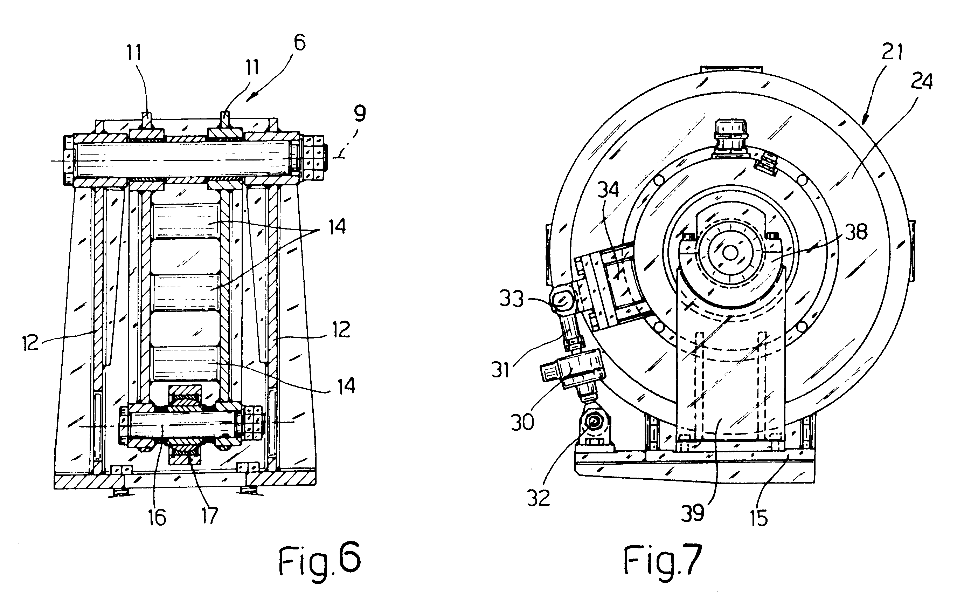

The means for varying the force N transmitted between the wheel 4 and roller 3 substantially comprise a support 6 for each roller 3, which is movable via the action of an actuator 7 adapted to bring the roller to act on the wheel. Each support 6 advantageously comprises a frame 8 oscillating about an axle 9 on the scaffolding 10 of the apparatus. This frame has two pairs of arms 11,12 (Figs. 2 and 4) which are substantially perpendicular to one another; the two arms 11 form a fork 13 (Fig. 2) adapted to support one of the rollers 3 in rotation; the other two arms 12 are connected by pegs 14 and by a pin 16 (Fig. 6) which is hinged, by a spherical bearing 17, on a crossbar 18 (Fig. 3) which is in turn hinged on the scaffolding 10 by a hinge pin 19. The actuator 7 and a load cell 20, adapted to measure the axial force acting along the crossbar, form part of the crossbar 18. The actuator 7 is advantageously formed by a hydraulic cylinder whose casing is hinged on the scaffolding 10 by the pin 19 and whose rod generates the central portion of the crossbar 18.

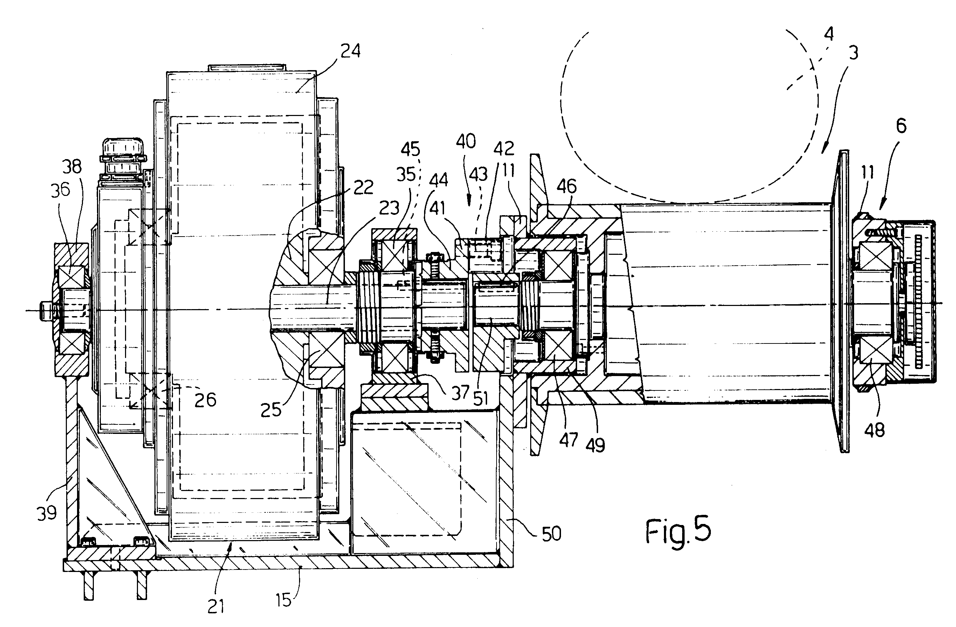

The means adapted to generate the tangential force T between the wheel 4 and roller 3 substantially comprise a motor 21 (Fig. 5) which is adapted to drive the roller in rotation. The motor 21 which is advantageously an electric motor comprises at least one rotor member 22 which is provided with a shaft 23 connected mechanically to the roller 3 and a stator member 24 coaxial with the rotor member which oscillates on a platform 15 borne by the fork 13 (Fig. 4) of the frame 8. The stator member 24 is supported on the rotor member 25 by rolling bearings 25 and 26, the first of which is interposed between the stator 24 and the shaft 23 and the second between the stator 24 and the rotor 22. As shown in Fig. 7, a second load cell 30 adapted to measure the torque transmitted between the stator member and the platform is interposed between the rotor member 24 and the platform 15. The above cell advantageously forms part of a crossbar 31 whose ends are hinged by pins 32 and 33 on the platform and on a member 34 for rigid connection to the stator member 24 respectively.

The shaft 23 of the rotor member 22 is supported on the platform 15 by a pair of bearings 35 and 36, the first of which is housed substantially within a support 37 secured to the platform 15 and the second of which is housed within a ring 38 secured to a wall 39 of the platform.

The shaft 23 is connected mechanically to the roller 3 by the mechanical transmission shown in Fig. 5. This transmission substantially comprises a joint 40 which has a pair of coaxial flanges 41 and 42 disposed opposite one another and connected by a series of screws 43. The flange 41 is rigid with a bushing 44 which acts as a seat for the bearing 35 and in the interior of which is inserted the end of the shaft 23: the connection between the shaft and bushing takes place via a tongue 45. The other flange 42 is provided with a boss within which is inserted a pin 46 rigid with the roller 3; the connection between the shaft and bushing takes place via a tongue 51. The roller 3 is supported by a pair of rolling bearings 47 and 48, the first of which is housed within a sleeve 49 fixed to a wall 50 of the platform 15 and the second of which is housed in a seat provided in the end of one of the arms 11 (Fig. 5) of the frame 8.

Rather than an electric motor, the motor 21 may be a hydraulic motor whose casing 24 forms the stator member oscillating with respect to the platform 15 of the apparatus. The torque between the stator member and platform may be measured in this case as well by the load cell 30 (Fig. 7) since the tubes for the supply and discharge of the hydraulic fluid do not impede the free oscillation of the stator member with respect to the platform 15.

In an alternative embodiment of the apparatus of the invention, the means adapted to generate the tangential force T (Fig. 1) between the wheel and roller comprise a brake (shown by the same numeral 21) rather than a motor 21, which brake is adapted to brake the rotation of the roller 3. In this case the roller 3 is caused to rotate by a drive wheel 4 of the vehicle.

When the motor 21 is replaced by a brake, the latter also has the structure of the motor and comprises a rotor member 22 connected to the roller 3 and a stator member 24 coaxial with the latter and oscillating on the platform 15. In this case the load cell 30 which is interposed between the rotor member 24 and the scaffolding 15 is adapted to measure the braking torque generated by the brake 21 and thus the torque between the stator member 24 and the rotor member 22.

The apparatus operates as follows.

The vehicle is placed on the support 1 at a predetermined height with respect to the means 5 in a configuration such as to place the axis of the wheel 4 and the axis of the relative roller 3 in substantially the same vertical plane as shown in Fig. 1. By acting on the actuator 7 the frame 8 is caused to rotate about the axle 9 so as to bring the roller 3 against the wheel 4. By adjusting the force generated by the actuator 7 (when the latter is formed by a hydraulic cylinder, the pressure within this cylinder) a desired normal force N between the roller 3 and wheel 4 may be generated which is contained in the vertical plane perpendicular to the common tangent plane between the roller and wheel.

At this point the electric motor 21 is actuated to control the rotation of the roller 3: when the wheel 4 is braked by acting on the brakes on the vehicle 2 being tested, a tangential force T is also generated whose maximum value, on reaching the limit condition of adhesion between the wheel 4 and the roller 3, is substantially equal to the product of the normal force N times the coefficient of friction caused by the contact between the wheel and roller.

It is evident that by appropriately adjusting the force generated by the actuator 7 the value of the force N and consequently the value of the tangential force T proportional thereto may be varied. In this way it is possible to generate any tangential force T (even of a very small value) such as that encountered in any real driving condition on a road (for instance on an icy road).

It is therefore evident that the apparatus of the invention makes it possible to generate tangential forces of friction T of any desired value, not by acting on the value of the coefficient of friction as is normally the case in normal driving conditions on the road, but on the value of the normal force N between the wheel 4 and roller 3.

The value of the tangential force T between the wheel and roller may be evaluated by the load cell 30 which measures the torque between the rotor member 24 and the stator member 22, which torque is directly proportional to the value of the tangential force T.

It is evident that the tangential force T may be generated, rather than by driving the roller 3 in rotation via the motor 21, by driving the roller in rotation via the wheel 4 (which has in this case to be a drive wheel) and braking the rotation of the roller by a brake 21 which replaces the motor. In this case as well the torque between the rotor member 24 and the stator member 22, measured by the load cell 30, is directly proportional to the tangential force T between the wheel 4 and roller 3.

## Claims

1. An apparatus for conducting braking tests on an automobile vehicle provided with a braking system having an anti-skid device, characterized in that it comprises a series of rotary rollers (3), each of which is adapted to form a support for a vehicle wheel (4), first means (5) adapted to vary the force N transmitted between the wheel and the roller in the direction substantially perpendicular to the tangent plane between the roller and wheel, said first means (5) comprising a support (1) for the vehicle bodywork adapted to hold it in a predetermined vertical position with respect to the rollers (3) and a support (6) for each of these rollers which can be moved by actuating an actuator (7) to bring the roller to act on the relative wheel and second means (21) adapted to generate a tangential force T between the roller and wheel contained substantially in this plane.

2. An apparatus as claimed in claim 1, characterized in that the support (6) for each of the rollers comprises a frame (8) oscillating on a scaffolding (10) of the apparatus, this frame substantially comprising two pairs of square arms (11, 12), two of which (11) form a fork (23) adapted to support one of the rollers (3) in rotation and the other arms (12) are hinged on a crossbar (18) which is in turn hinged on the scaffolding (10), the actuator (7) being adapted to vary the length of this crossbar.

3. An apparatus as claimed in claim 2, characterized in that a load cell (20) adapted to measure the axial force acting on this crossbar forms part of the crossbar (18).

4. An apparatus as claimed in one of the preceding claims, characterized in that the second means (21) adapted to generate a tangential force T between the wheel and roller comprise a motor (21) adapted to drive the roller in rotation.

5. An apparatus as claimed in claim 4 characterized in that the motor (21) comprises a rotor member (22) connected to the roller (3) and a stator member (24) coaxial with the latter and oscillating on a platform (15) borne by the fork (13), a second load cell (30) adapted to measure the torque transmitted between the stator member and the rotor member being interposed between the stator member (24) and the platform (15).

6. An apparatus as claimed in one of claims 1 to 3, characterized in that the second means (21) adapted to generate a tangential force T between the wheel and roller comprise a brake (21) adapted to brake the rotation of the roller.

7. An apparatus as claimed in claim 6, characterized in that the brake (21) comprises a rotor member (20) connected to the roller (3) and a stator member (24) coaxial with the latter and oscillating on the platform (15), a second load cell (30) adapted to measure the torque transmitted between the stator member and the rotor member being interposed between the stator member (24) and the platform (15).

## Patentansprüche

1. Gerät zur Durchführung von Bremstests an einem Kraftfahrzeug, das mit einem Bremssystem ausgestattet ist, das eine Anti-Skid- bzw. eine Antiblockiervorrichtung besitzt, dadurch gekennzeichnet, daß es eine Reihe von Drehwalzen (3), von denen jede dazu geeignet ist, einen Träger für ein Fahrzeugrad (4) zu bilden, eine erste Einrichtung (5), die dazu geeignet ist, eine Kraft N zu variieren, die zwischen dem Rad und der Walze in der Richtung im wesentlichen senkrecht zu der Tangentialebene zwischen der Walze und dem Rad übertragen wird, aufweist, wobei die erste Einrichtung (5) einen Träger (1) für den Fahrzeugaufbau, der dazu geeignet ist, ihn in einer vorbestimmten vertikalen Position hinsichtlich der Walzen (3) zu halten, und einen Träger (6) für jede dieser Walzen, die durch Betätigung einer Betätigungseinrichtung (7) bewegt werden können, um die Walze dahingehend zu bringen, auf das zugeordnete Rad einzuwirken, und eine zweite Einrichtung (21) aufweist, die dazu geeignet ist, eine Tangentialkraft T zwischen der Walze und dem Rad, die im wesentlichen in dieser Ebene enthalten sind, zu erzeugen.

2. Gerät nach Anspruch 1, dadurch gekennzeichnet, daß der Träger (6) für jede der Walzen einen Rahmen (8), der an einem Gerüst (10) jedes Geräts oszilliert, aufweist, wobei dieser Rahmen im wesentlichen zwei Paare vierkantiger Arme (11, 12) aufweist, wobei zwei davon (11) eine Gabel (23) bilden, die dazu geeignet ist, eine der Walze (3) in Drehung zu halten, und die anderen Arme (12) gelenkig an einem Querstab (18) aufgehängt sind, der wiederum an dem Gerüst (10) gelenkig aufgehängt ist, wobei die Beätigungseinrichtung (7) dazu geeignet ist, die Länge dieses Querstabs zu variieren.

3. Gerät nach Anspruch 2, dadurch gekennzeichnet, daß eine Belastungszelle (20), die dazu geeignet ist, die axiale Kraft, die auf diesen Querstab wirkt, zu messen, einen Teil des Querstabs (18) bildet.

4. Gerät nach einem der vorhergehenden Ansprüche, dadurch gekennzeichnet, daß die zweite Einrichtung (21), die dazu geeignet ist, eine Tangentialkraft T zwischen dem Rad und der Walze zu erzeugen, einen Motor (21) aufweist, der dazu geeignet ist, die Walze in Rotation anzutreiben.

5. Gerät nach Anspruch 4, dadurch gekennzeichnet, daß der Motor (21) ein Rotorteil (22), das mit der Walze (3) verbunden ist, und ein Statorteil (24) koaxial zu der letzteren und auf einer Plattform (15), die durch die Gabel (13) getragen wird, oszillierend aufweist, wobei eine zweite Belastungszelle (30), die dazu geeignet ist, das Drehmoment zu messen, das zwischen dem Statorteil und dem Rotorteil übertragen wird, zwischen dem Statorteil (24) und der Plattform (15) zwischengefügt ist.

6. Gerät nach einem der Ansprüche 1 bis 3, dadurch gekennzeichnet, daß die zweite Einrichtung (21) dazu geeignet ist, eine Tangentialkraft T zwischen dem Rad und der Walze zu erzeugen, die eine Bremse (21) aufweist, die dazu geeignet ist, die Drehung der Walze zu bremsen.

7. Gerät nach Anspruch 6, dadurch gekennzeichnet, daß die Bremse (21) ein Rotorteil (20), das mit der Walze (3) verbunden ist, und ein Statorteil (24) koaxial zu der letzteren und auf der Plattform (15) oszillierend aufweist, wobei eine zweite Belastungszelle (30), die dazu geeignet ist, das Drehmoment zu messen, das zwischen dem Statorteil und dem Rotorteil übertragen wird, zwischen dem Statorteil (24) und der Plattform (15) zwischengefügt ist.

## Revendications

1. Appareil pour effectuer des essais de freinage sur un véhicule automobile équipé d'un système de freinage à dispositif anti-dérapage, caractérisé en ce qu'il comprend une série de rouleaux rotatifs (3), dont chacun peut constituer un support pour une roue (4) du véhicule, des premiers moyens (5) permettant de faire varier la force N transmise entre la roue et le rouleau dans la direction sensiblement perpendiculaire au plan de tangence entre le rouleau et la roue, lesdits premiers moyens (5) comprenant un support (1) pour le châssis du véhicule, qui peut tenir ce dernier dans une position verticale prédéterminée par rapport aux rouleaux (3), et un support (6) pour chacun de ces rouleaux, ce support (6) pouvant être déplacé par commande d'un actionneur (7) de manière à ce que le rouleau vienne agir sur la roue correspondante, et des deuxièmes moyens (21) permettant d'engendrer une force tangentielle T entre le rouleau et la roue, cette force étant contenue sensiblement dans ce plan de tangence.

2. Appareil suivant la revendication 1, caractérisé en ce que le support (6) pour chacun des rouleaux comprend un cadre (8) qui oscille sur un socle (10) de l'appareil, ce cadre comportant essentiellement deux paires de bras en équerre (11,12), deux de ces bras (11) formant une fourche (23) prévue pour supporter un des rouleaux (3) en rotation, et les autres bras (12) étant articulés sur une traverse (18) qui est elle-même articulée sur le socle (10), l'actionneur (7) étant agencé pour faire varier la longueur de cette traverse.

3. Appareil suivant la revendication 2, caractérisé en ce qu'une cellule de charge (20), permettant de mesurer la force axiale qui agit sur ladite traverse, constitue une partie de la traverse (18).

4. Appareil suivant une quelconque des revendications précédentes, caractérisé en ce que les deuxièmes moyens (21), prévus pour engendrer une force tangentielle T entre la roue et le rouleau, comprennent un moteur (21) qui peut entraîner le rouleau en rotation.

5. Appareil suivant la revendication 4, caractérisé en ce que le moteur (21) comprend un rotor (22) accouplé au rouleau (3) et un stator (24) coaxial à ce dernier et oscillant sur une plateforme (15) portée par la fourche (13), une deuxième cellule de charge (30) agencée pour mesurer le couple transmis entre le stator et le rotor étant interposée entre le stator (24) et la plateforme (15).

6. Appareil suivant une quelconque des revendications 1 à 3, caractérisé en ce que les deuxièmes moyens (21) prévus pour engendrer une force tangentielle T entre la roue et le rouleau comprennent un frein (21) qui peut freiner la rotation du rouleau.

7. Appareil suivant la revendication 6, caractérisé en ce que le frein (21) comprend un rotor (20) accouplé au rouleau (3) et un stator (24) coaxial à ce dernier et oscillant sur la plateforme (15), une deuxième cellule de charge (30) agencée pour mesurer le couple transmis entre le stator et le rotor étant interposée entre le stator (24) et la plateforme (15).
